# EUROPEAN PATENT APPLICATION

(11) **EP 4 749 549 A1**
(43) Date of publication of application: **27.05.2026**
(21) Application number: 25211338.6
(22) Date of filing: 27.10.2025
(51) Int. Cl.: G06Q 10/42, G06Q 30/0201, G06Q 30/0241

(54) **ARTIFICIAL INTELLIGENCE BASED SHARED SOCIAL MEDIA**

(30) Priority: 26.11.2024 US 202463725018 P; 10.10.2025 US 202519354994
(71) Applicant: Meta Platforms, Inc., Menlo Park, CA 94025 (US)
(72) Inventor: Manickam Alagar Muthumanickam, Arun Karthick, Menlo Park, 94025 (US)
(74) Representative: Murgitroyd & Company

(57) **Abstract**

Methods, systems, or computing devices are disclosed for enabling shared social media sessions that may allow multiple users to synchronously experience personalized content across different devices. The system may leverage artificial intelligence to create dynamic, constraint-free content streams that incorporate preferences from multiple users while maintaining individual privacy controls. Users may initiate shared sessions through messaging interfaces or standalone applications, with content sourced from multiple platforms and tailored to the collective preferences of session participants.

## Description

### TECHNOLOGICAL FIELD

The present disclosure relates to social media content delivery systems, and more specifically to artificial intelligence-based systems and methods for enabling shared viewing experiences across multiple user devices or platforms.

### BACKGROUND

Social media platforms facilitate user interaction, content sharing, and network building through digital profiles, multimedia posting, and engagement tools such as likes, comments, and sharing functions. These platforms employ algorithms to personalize content and optimize user experience, enhancing connectivity, information exchange, and social engagement across a diverse, global user base.

### SUMMARY

Methods, systems, or computing devices are disclosed for enabling shared social media sessions that may allow multiple users to synchronously experience personalized content across different devices. The system may leverage artificial intelligence (AI) to create dynamic, constraint-free content streams that incorporate preferences from multiple users while maintaining individual privacy controls. Users may initiate shared sessions through messaging interfaces or standalone applications, with content sourced from multiple platforms and tailored to the collective preferences of session participants.

Methods, systems, or computing devices may provide for receiving input requesting initiation of a shared social media session; determining a first user profile associated with a first user device; determining a second user profile associated with a second user device; accessing content across different content sources based on the first user profile and the second user profile; generating a unified content feed combining content from the different content sources; and transmitting the unified content feed to the first user device and the second user device.

According to an aspect, there is provided a method comprising:
receiving, by one or more computer processors coupled to memory, input requesting initiation of a shared social media session;
determining a first user profile associated with a first user device;
determining a second user profile associated with a second user device;
accessing content across different content sources based on the first user profile and the second user profile;
generating a unified content feed based on combining content from the different content sources; and
transmitting the unified content feed to the first user device and the second user device.

In one embodiment, the method further comprises receiving a message to control synchronized or independent navigation through the unified content feed by the first user device or the second user device.

In one embodiment, the method further comprises integrating advertisement content within the unified content feed.

In one embodiment, generating the unified content feed comprises applying one or more artificial intelligence models trained on shared viewing preferences of the first user profile and the second user profile.

In one embodiment, the one or more artificial intelligence models incorporate location information and historical content interaction patterns.

In one embodiment, the method further comprises enabling transition between synchronized and independent content navigation modes.

In one embodiment, generating the unified content feed is based on a first privacy setting corresponding to the first user profile and a second privacy setting corresponding to the second user profile.

In one embodiment, the different content sources comprise a plurality of social media platforms.

According to another aspect, there is provided a non-transitory computer readable storage medium storing computer executable instructions that when executed by a computing device cause the computing device to perform the method set out above.

According to a further aspect, there is provided a device comprising:
a processor; and
a memory coupled with the processor, the memory storing executable instructions that when executed by the processor cause the processor to perform the method set out above.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### DESCRIPTION OF THE DRAWINGS

FIG. 1 illustrates an example system for shared social media content.
FIG. 2 illustrates an example synchronized mode associated with shared social media content.
FIG. 3A illustrates an example of a shared group newsfeed associated with social media.
FIG. 3B illustrates an example of a shared group content associated with social media.
FIGS. 3C-3F depict example user interfaces of various shared social media content in accordance with one or more embodiments.
FIG. 4 illustrates an example method for shared social media content.
FIG. 5 illustrates an example method for shared social media content.
FIG. 6 illustrates a framework for shared social media content associated with machine learning.
FIG. 7 illustrates an example block diagram of an exemplary computing device suitable for implementing aspects of the disclosed subject matter.

The figures depict various embodiments for purposes of illustration only. One skilled in the art will readily recognize from the following discussion that alternative embodiments of the structures and methods illustrated herein may be employed without departing from the principles described herein.

### DETAILED DESCRIPTION

Some embodiments of the present invention will now be described more fully hereinafter with reference to the accompanying drawings, in which some, but not all embodiments of the invention are shown. Various embodiments of the invention may be embodied in many different forms and should not be construed as limited to the embodiments set forth herein. Like reference numerals refer to like elements throughout.

It is to be understood that the methods and systems described herein are not limited to specific methods, specific components, or to particular implementations. It is also to be understood that the terminology used herein is for the purpose of describing particular embodiments only and is not intended to be limiting.

Conventional social media platforms provide individualized content feeds based on single-user preferences and behaviors and operate in isolation, requiring users to individually access multiple applications to view content across different platforms. This creates inefficiencies as users switch between applications to consume content from various sources, disrupting user experience and engagement. In addition, while users can share individual content items with others through direct messages or group chats, there exists no capability for multiple users to synchronously experience personalized content streams together in real-time across different devices. Conventional implementations require users to physically share a single device screen or manually coordinate their viewing, creating a fragmented and inefficient experience. The disclosed shared social media system provides an architecture that enables synchronized multi-user experiences.

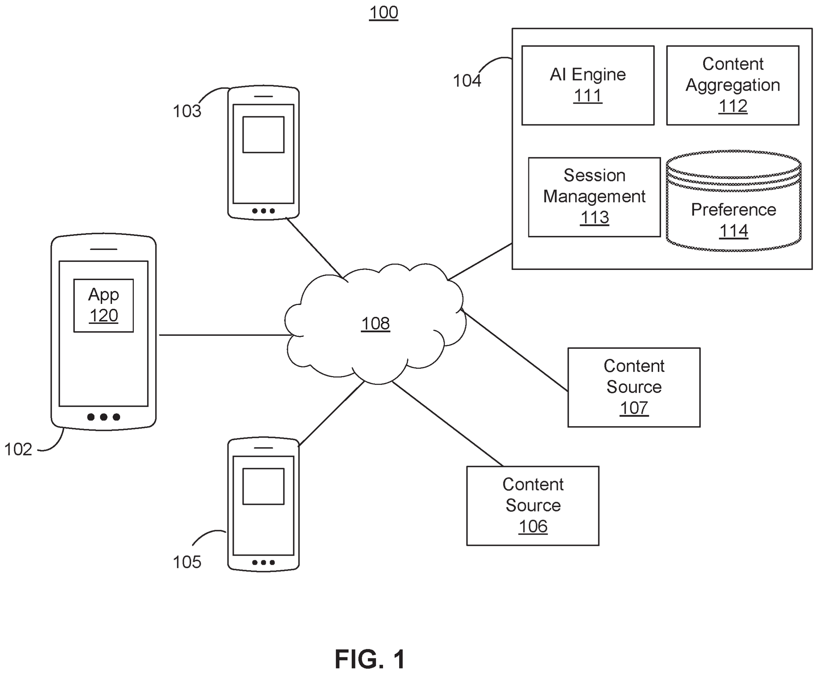

FIG. 1 illustrates an example system 100 associated with shared social media. System 100 may include user device 102, user device 103, user device 105, content platform 104 (e.g., social media platform 104), content source 106, or content source 107, which may be communicatively connected with each other, such as through network 108. User devices, such as user device 102, may include smartphones, tablets, laptops, or other devices capable of displaying content. User device 102, user device 103, or user device 105 may execute a shared session client application 120 (also referred herein as application 120) that may provide a user interface for participating in shared viewing experiences.

Content platform 104 may forms a core processing hub of system 100, incorporating several interconnected services that enable shared content (e.g., social media) experiences. AI engine 111 may process user preferences and session parameters to generate dynamic content recommendations. AI engine 111 may implement machine learning models trained on historical user engagement data or other information to predict content relevance for group viewing scenarios. Content aggregation service 112 may interface with multiple content sources, such as content source 106 or content source 107 through standardized application programming interfaces (APIs) to compile diverse media content while maintaining consistent metadata formatting and playback capabilities.

Session management module 113 may coordinate the shared experience between participant devices, maintaining session state through distributed tokens or real-time state reconciliation. Session management module 113 may monitor network conditions or device capabilities to optimize content delivery and minimize playback disruptions. User preference database 114 may store individual or collective viewing preferences. User preference database 114 may store granular privacy controls that allow users to specify which preferences may be shared during group sessions.

Content source 106, content source 107, or content platform 104 may represent various social media platforms, streaming services, or content repositories that provide media content to the system 100. Each content source may expose APIs that enable content discovery, metadata retrieval, or streaming functionality. Content aggregation service 112 may implement platform-specific adapters to normalize the integration with these diverse sources, ensuring consistent content delivery regardless of the original platform. This architecture may enable system 100 to deliver synchronized, multi-platform viewing experiences while maintaining individual privacy controls or optimizing network resource utilization through intelligent content caching or delivery mechanisms.

With continued reference to content sources, content source categories may include social media network platforms providing short-form video content, image sharing capabilities, micro-blogging functionality, professional networking features, or visual discovery tools. Content aggregation may extend to streaming service providers offering video-on-demand content, television programming, motion pictures, or audio streaming capabilities. System 100 may integrate with subscription-based or advertisement-supported streaming platforms through authorized API access and content delivery protocols. User-generated content sources may include personal web logging platforms, audio podcast hosting services, independent content creator platforms, or real-time streaming services. These sources may provide public APIs enabling content discovery or retrieval while maintaining creator attribution and rights management.

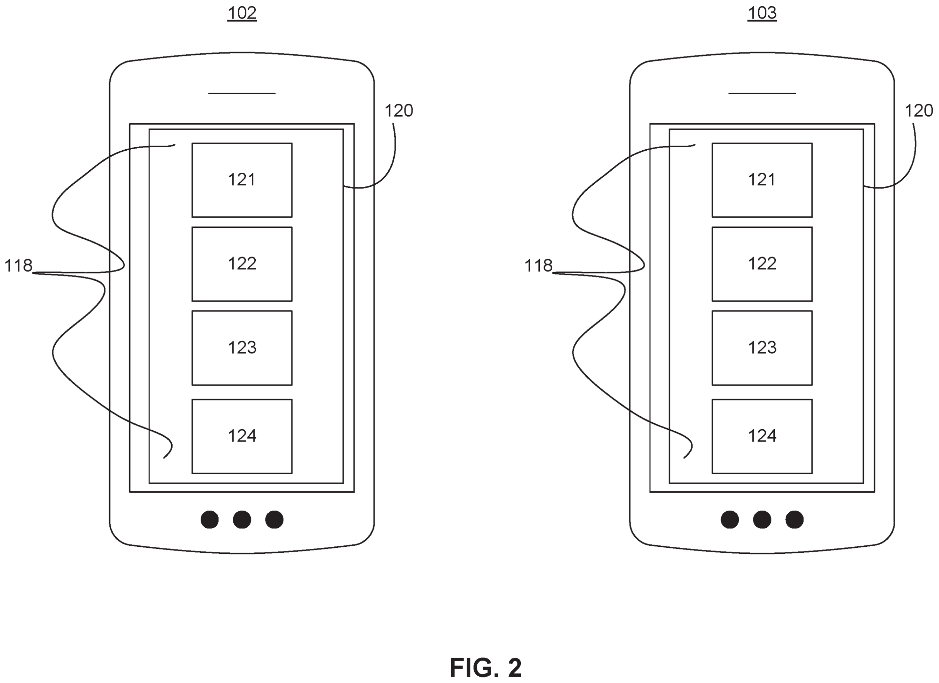

System 100 may provide mechanisms for transitioning between synchronized and independent navigation modes during shared social media sessions. Session management module 113 may maintain a dedicated session state object that tracks current navigation modes or precise content positions for each session participant, e.g., user device 102 with a corresponding user profile and user device 103 with a corresponding use profile. The session state object may function as a reference for coordinating mode transitions. In an example, during transition to synchronized mode, system 100 may capture the current content position of a designated session leader; broadcast a synchronization event to participant devices through a session management service; implement visual transitions through content view animations to match the session leader's position; and maintain near real-time position updates across synchronized users through state reconciliation or periodic network verification. FIG. 2 illustrates an example of a synchronized mode with user device 102 and user device 103 showing the same newsfeed information.

In an example, for transition to independent mode, system 100 may transmit a detachment signal to the requesting device (e.g., user device 103) while preserving current content position data, establish independent position tracking mechanisms, maintain synchronized group position awareness (e.g., a group that include user device 102, user device 103, and user device 105), and present visual position indicators within the content feed interface (e.g., application 120). The implementation may enable users in independent mode to navigate content freely while retaining synchronized viewing rejoining capabilities through interface controls.

In an example, system 100 may implement group awareness during mixed-mode viewing through a visualization subsystem. This visualization subsystem may render persistent visual indicators displaying each participant's current content position and navigation mode status. The visualization components may update in near real-time response to navigation events and mode transitions, enabling participant position awareness and facilitating dynamic resynchronization capabilities.

FIG. 2 illustrates example devices associated with shared content viewing. As shown, user device 102 and user device 103 may show the same interface and may include an application 120 which may be displayed. There may be content feed 118 (e.g., electronic social media newsfeed) with different slots, such as content slot 121, content slot 122, content slot 123, or content slot 124. Content feed 118 may be a consolidated content feed structure that provides for intelligent slot allocation. Content slots may include first-party slots that contain content from platforms owned by a first entity (which may include different messaging applications) or second entity slots that contain content from external messaging platforms. The first entity slots may include content from different messaging applications (e.g., different types of social media platforms). Content slot 121, content slot 122, content slot 123, or content slot 124 may include organic content, sponsored content, or the like. Organic content in the social media context may include user-generated posts, personal stories, shared photos, or natural interactions between connected users without promotional intent.

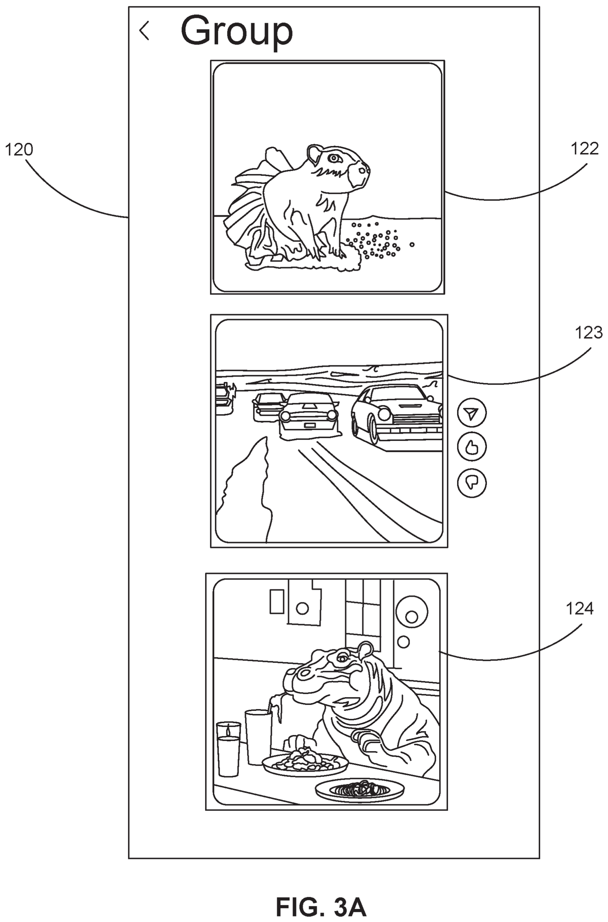

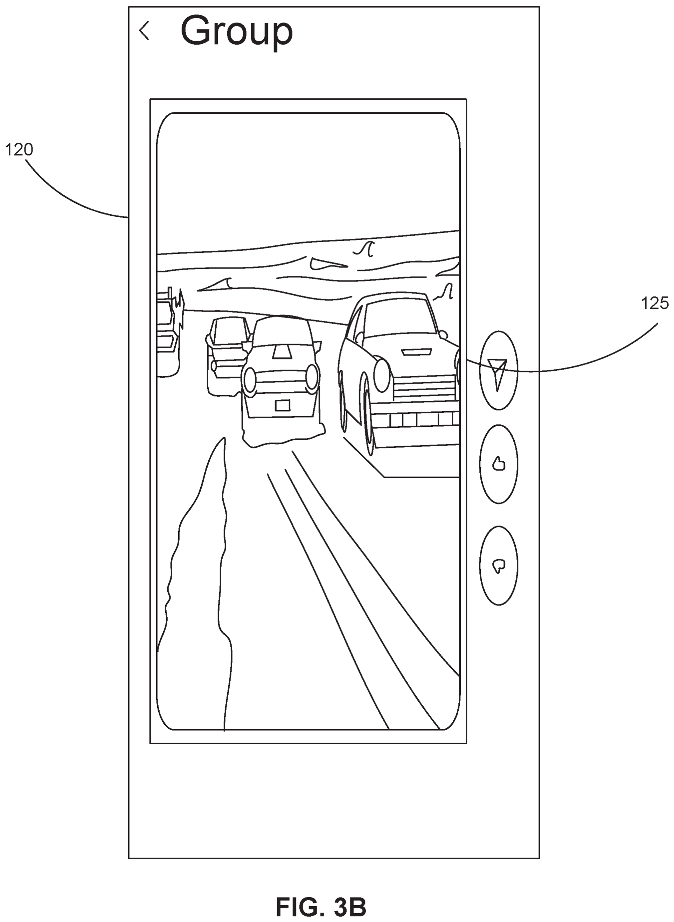

FIG. 3A illustrates an example of a shared group newsfeed, as shown in FIG. 2. FIG. 3B illustrates an example content 125 sharing (e.g., reels, clip, movie, or other content), which may be displayed to a group (e.g., user device 102, user device 103, and user device 105). As shown, likes, comments, sharing, or the like may be made using one or more user profiles in the shared group session.

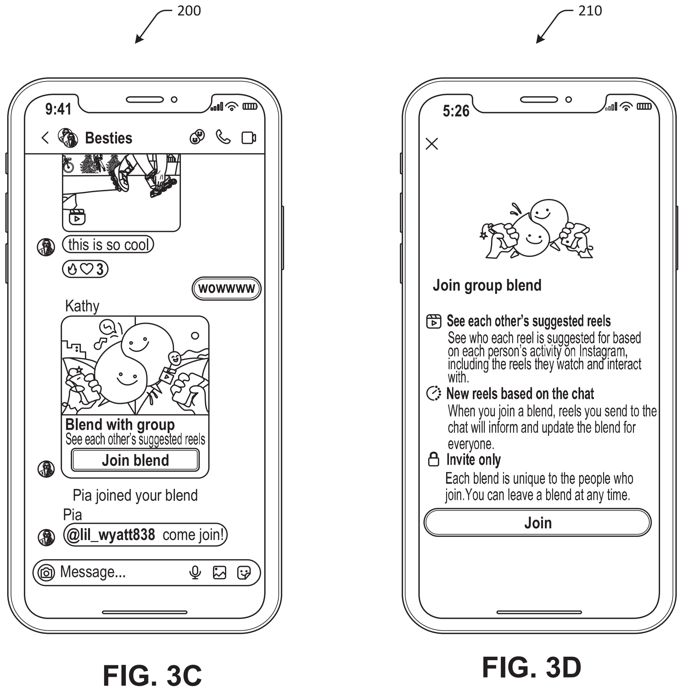

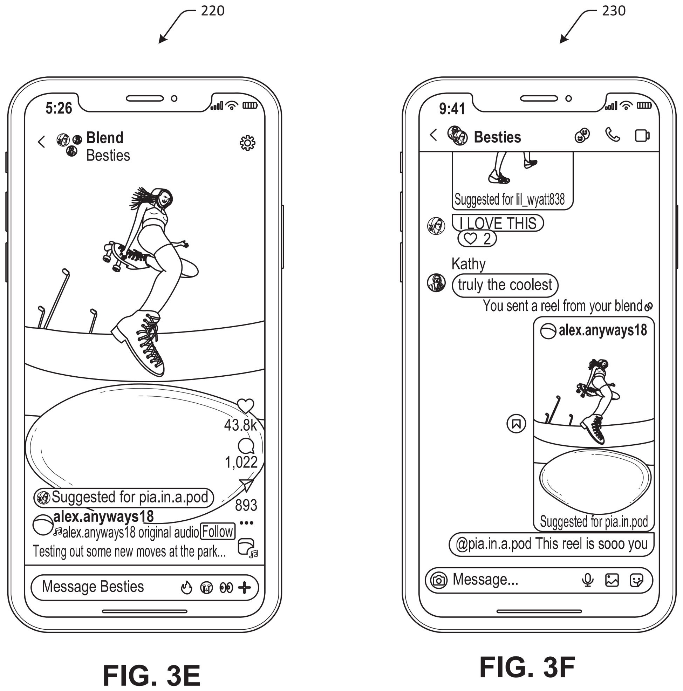

FIGS. 3C-3F depict example user interfaces of various shared social media content in accordance with one or more embodiments. In FIG. 3C, a first user interface 300 depicts a shared thread, such as a messaging thread between a plurality of users, where an option to join a shared social media content feed is presented. For example, a first user may share a link to "Blend with group" and other users may join by selecting a selectable option. A notification of joined users may be presented in the first user interface 300 (e.g., Pia joined your blend, etc.). Additional users may be tagged using user identifiers, where the additional users may be added to the shared thread upon tagging. In FIG. 3D, a second user interface 210 depicts a user interface presented when the selectable option in the first user interface 200 is selected. For example, the second user interface 210 may provide information related to short form video content that users can suggest for each other and/or other content recommendations that may be provided to a first user, which can then be presented to a second user (e.g., User A may receive content recommendations that are presented to User B regardless of User A's preferences, etc.). The blended content may be aggregated based on user preferences for multiple different users in the group. FIG. 3E presents a third user interface 220 in which a content recommendation for a user is presented to the blended group of users (e.g., suggested for pia.in.a.pod, etc.). The third user interface 220 may include a notification related to which user the content was recommended for. FIG. 3F presents a fourth user interface 230 where the users in the shared group can comment on the blended content, and users can comment and/or engage with the content and/or other users.

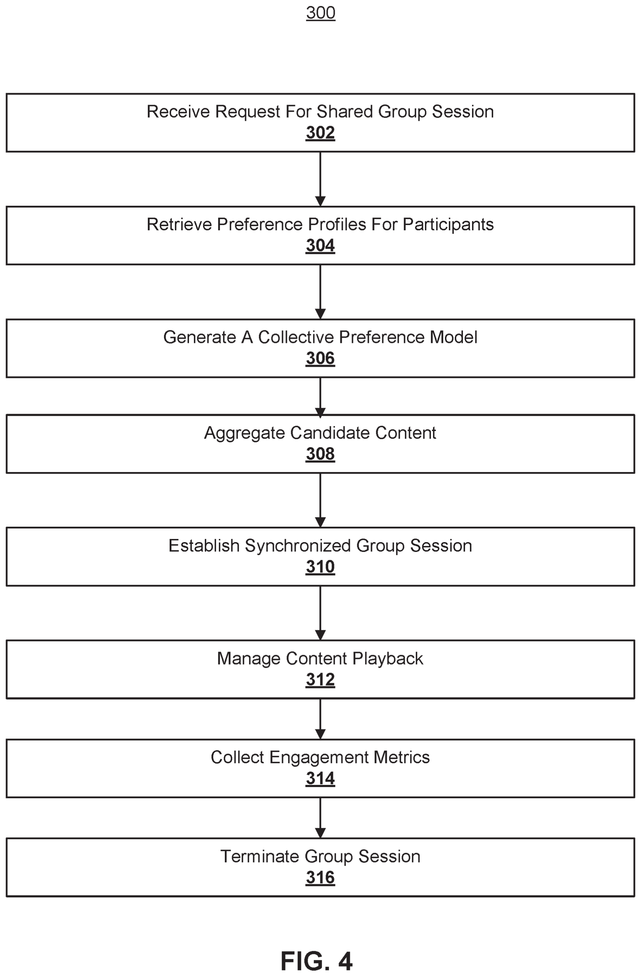

FIG. 4 illustrates an example method 300 for implementing shared group sessions. At step 302, a shared group session request may be received from an initiating user device 102. This request may include session parameters defining the type of content, such as topics, video content, image content, or mixed media content. The request may specify invited participants (e.g., user profiles associated with user device 103 or user device 105) who will join the shared viewing experience. Initiating user device 102 may submit this request through a messaging interface integrated with the AI agent or through a standalone application interface 120.

Based on the group session request of step 302, at step 304 user preference profiles for invited participants may be retrieved who have enabled preference sharing. A user preference may be a subset of a user profile. The user preference profiles may include historical content interactions, explicitly stated interests, or implicitly derived preferences based on past engagement metrics. Preferences may only be retrieved if there is an indication of authorization for shared group sessions which may be through privacy controls. The preference retrieval process may access a distributed database architecture that maintains segregated storage of private and shareable preference data.

At step 306 a collective preference model may be generated based on overlapping interests identified across participant profiles. In an example, AI engine 111 may employ machine learning algorithms to identify common themes, content categories, or engagement patterns among the participants while implementing individual privacy boundaries. This collective model may weigh various factors including content type preferences, viewing duration patterns, interaction styles, or temporal engagement trends to create a unified preference representation for the group.

At step 308, candidate content may be aggregated from multiple platforms that match the generated preference model (e.g., unified content). The content aggregation process may interface with various platform APIs to compile diverse media content including short-form videos, images, articles, or interactive content. System 100 may normalize metadata across platforms and may filter content based on collective preference criteria while maintaining platform-specific engagement mechanics. The aggregation process may run continuously during the shared group session to ensure a steady stream of relevant content.

At step 310, a synchronized group session state may be established across participant devices. This synchronization process may create a distributed session token that maintains consistent playback states, interaction records, or content queues across user devices. A heartbeat monitoring mechanism may be implemented to detect or recover from network interruptions or device disconnections. State synchronization may include content buffering status, playback position, interaction events, or participant presence indicators.

At step 312, content playback and participant interactions may be actively managed throughout the group session. This may include processing real-time interactions such as reactions, comments, or content skips while maintaining synchronization across devices. The management layer may handle different interaction modes including fully synchronized playback where participants view identical content simultaneously, or semi-synchronized browsing where participants may explore content independently while maintaining awareness of activities of other participants.

At step 314, engagement metrics may be collected to refine future recommendations. These metrics may include content view durations, interaction patterns, synchronization events, or explicit feedback. AI engine 111, for example, may process these metrics to update individual or collective preference models, improving content selection for future sessions. Anonymized engagement data may be maintained to protect participant privacy while enabling aggregate analysis for optimization.

At step 316, there may be session termination based on explicit participant requests or system-defined timeout conditions. During termination, system 100 may persist relevant engagement metrics, updates preference models, or disconnects some or all participant devices while preserving session history for future reference. The termination process may include cleanup of temporary session resources and notification of some or all participants regarding session conclusion.

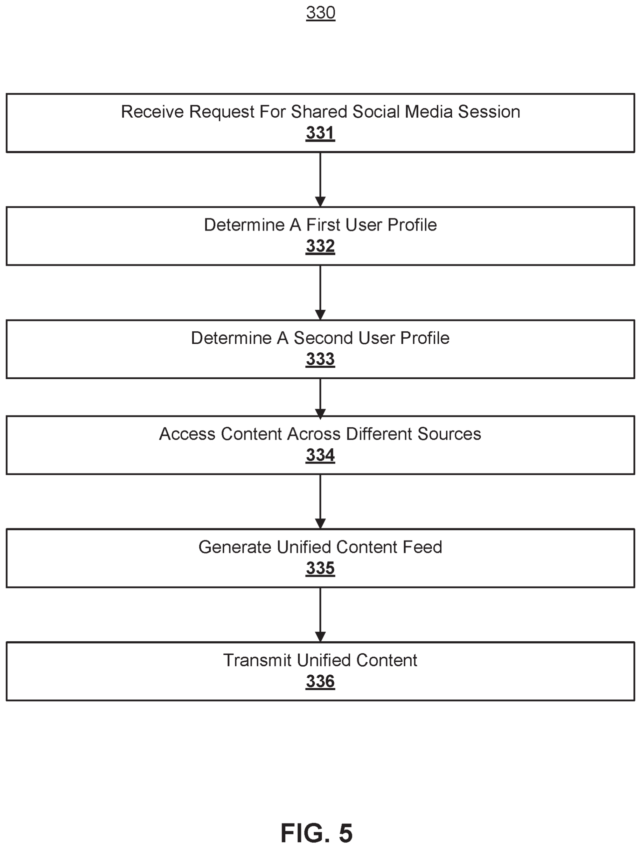

FIG. 5 illustrates an example method 330 for implementing shared group sessions as disclosed herein. At step 331, a computing device (e.g., content platform 104) may receive input requesting initiation of a shared social media session. The input request may be processed through various interface layers including messaging applications, standalone clients, or integrated platform features, with request validation and session parameter extraction.

At step 332, content platform 104 may determine a first user profile associated with user device 102. At step 333, content platform 104 may determine a second user profile associated with user device 103. Profile determination may involve comprehensive analysis of stored preference data, historical interaction patterns, platform-specific usage metrics, or the like information. The system may validate authentication credentials, access permissions, or profile status while evaluating cross-platform activity patterns and preference indicators.

At step 334, content platform 104 may access content across different content sources based on the first user profile and the second user profile. The content access implementation may interface with multiple social media platforms through standardized APIs, employing platform-specific content retrieval protocols or metadata normalization processes. Caching mechanisms may optimize content retrieval while maintaining data freshness and consistency across platforms.

At step 335, content platform 104 may generate a unified content feed combining content from the different content sources. Generation may leverage machine learning (ML) models trained specifically on shared viewing preferences, incorporating location data or historical interaction patterns for content selection optimization. The unified feed may implement restrictions associated with individual privacy settings while integrating targeted advertisement content at determined positions. The AI models (e.g., ML model) may employ filtering or content-based recommendation to enhance relevance.

At step 336, content platform 104 may transmit the unified content feed to the first user device and the second user device. Adaptive streaming protocols and dynamic quality adjustment may be implemented based on network conditions or user device capabilities. System 100 may facilitate transitions between synchronized and independent navigation modes through state management protocols that maintain session consistency.

The disclosed subject matter may incorporate near real-time synchronization mechanisms maintaining consistent content states across user devices, managing concurrent interactions, or handling connectivity changes. Content delivery optimization may include predictive pre-buffering, bandwidth-aware quality adaptation, or resource allocation across multiple active sessions. System 100 may implement format conversion to help ensure consistent experience across varied content sources. The methods disclosed herein may executed on one device or a plurality of devices.

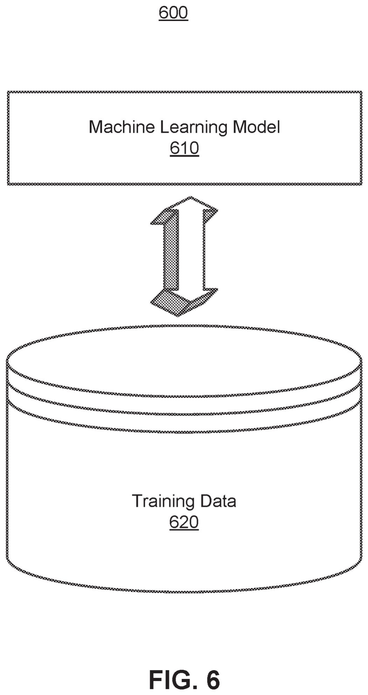

FIG. 6 illustrates a framework 600 associated with machine learning and/or artificial intelligence (AI). The framework 600 may be hosted remotely. Alternatively, the framework 600 may reside within the system 100 shown in FIG. 1 and may be processed/implemented by a device. In some examples, the machine learning model 610 (also referred to herein as artificial intelligence model 610) may be implemented/executed by a network device (e.g., server). In other examples, the machine learning model 610 may be implemented/executed by other devices (e.g., user device 102). The machine learning model 610 may be operably coupled with the stored training data in a training database (e.g., data store). In some examples, the machine learning model 610 may be associated with other operations. The machine learning model 610 may be one or more machine learning models.

In another example, the training data 620 may include attributes of thousands of objects. Attributes may include but are not limited to the size, shape, orientation, position of the object(s), etc. The training data 620 employed by the machine learning model 610 may be fixed or updated periodically. Alternatively, the training data 620 may be updated in real-time based upon the evaluations performed by the machine learning model 610 in a non-training mode. This is illustrated by the double-sided arrow connecting the machine learning model 610 and stored training data 620.

The machine learning model 610 may be designed to generate consolidated content feeds associated with one or more received inputs, based in part on utilizing determined contextual information. This information includes fields like a description, variables defined, data category associated with the variables and the output (e.g., unified content feeds), and responses to generated prompts. The machine learning model 610 may be a large language model to generate representations (e.g., vector spaces), or embeddings, of one or more of the one or more inputs received. These machine learning model 610 may be trained (e.g., pretrained and/or trained in real-time) on a vast amount of textual data (e.g., associated with the one or more inputs), previous responses to one or more prompts generated, previously generated content feeds, or data capture of a wide range of language patterns and semantic meanings. The machine learning model 610 may understand and represent the context of words, terms, phrases and/or the like in a high-dimensional space, effectively capturing/determining the semantic similarities between different received inputs, including descriptions and responses to prompts, even when they are not exactly the same.

Typically, such determinations by some existing systems may require a large quantity of manual annotation(s) and/or brute force computer-based annotation to obtain the training data in a supervised training framework. However, example aspects of the present disclosure may deploy a machine learning model(s) (e.g., machine learning model 610) that may be flexible, adaptive, automated, temporal, learns quickly and trainable. Manual operations or brute force device operations may be unnecessary for the examples of the present disclosure due to the learning framework aspects of the present disclosure that are implementable by the machine learning model 610. As such, this enables one or more user inputs, queries, or other aspects of the examples of the present disclosure to be flexible and scalable to billions of users, and their associated communication devices, on a network device.

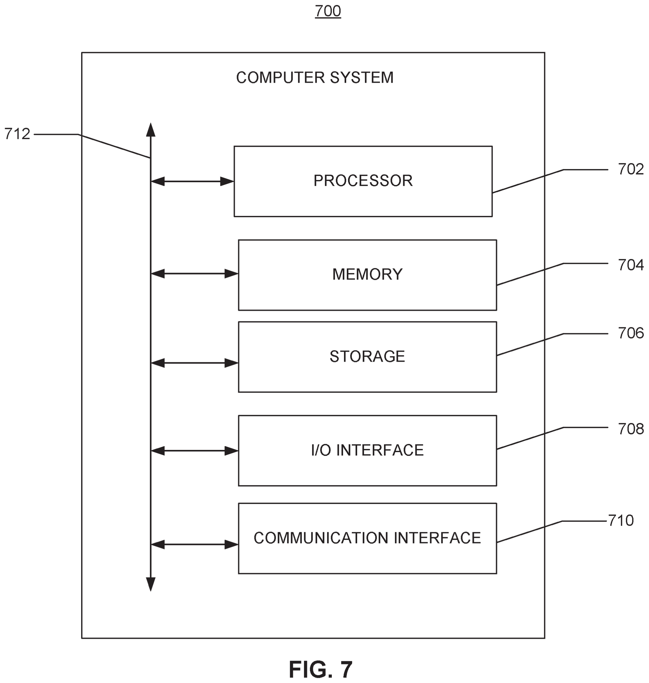

FIG. 7 illustrates an example computer system 700. In examples, one or more computer systems 700 perform one or more steps of one or more methods described or illustrated herein. In particular embodiments, one or more computer systems 700 (e.g., user device 102, preference database 114, or content platform 104) provide functionality described or illustrated herein. In examples, software running on one or more computer systems 700 performs one or more steps of one or more methods described or illustrated herein or provides functionality described or illustrated herein. Examples include one or more portions of one or more computer systems 700. Herein, reference to a computer system may encompass a computing device, and vice versa, where appropriate. Moreover, reference to a computer system may encompass one or more computer systems, where appropriate.

This disclosure contemplates any suitable number of computer systems 700. This disclosure contemplates computer system 700 taking any suitable physical form. As example and not by way of limitation, computer system 700 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, or a combination of two or more of these. Where appropriate, computer system 700 may include one or more computer systems 700; be unitary or distributed; span multiple locations; span multiple machines; span multiple data centers; or reside in a cloud, which may include one or more cloud components in one or more networks. Where appropriate, one or more computer systems 700 may perform without substantial spatial or temporal limitation one or more steps of one or more methods described or illustrated herein. As an example, and not by way of limitation, one or more computer systems 700 may perform in real time or in batch mode one or more steps of one or more methods described or illustrated herein. One or more computer systems 700 may perform at different times or at different locations one or more steps of one or more methods described or illustrated herein, where appropriate.

In examples, computer system 700 includes a processor 702, memory 704, storage 706, an input/output (I/O) interface 708, a communication interface 710, and a bus 712. Although this disclosure describes and illustrates a particular computer system having a particular number of particular components in a particular arrangement, this disclosure contemplates any suitable computer system having any suitable number of any suitable components in any suitable arrangement.

In examples, processor 702 includes hardware for executing instructions, such as those making up a computer program. As an example, and not by way of limitation, to execute instructions, processor 702 may retrieve (or fetch) the instructions from an internal register, an internal cache, memory 704, or storage 706; decode and execute them; and then write one or more results to an internal register, an internal cache, memory 704, or storage 706. In particular embodiments, processor 702 may include one or more internal caches for data, instructions, or addresses. This disclosure contemplates processor 702 including any suitable number of any suitable internal caches, where appropriate. As an example, and not by way of limitation, processor 702 may include one or more instruction caches, one or more data caches, and one or more translation lookaside buffers (TLBs). Instructions in the instruction caches may be copies of instructions in memory 704 or storage 706, and the instruction caches may speed up retrieval of those instructions by processor 702. Data in the data caches may be copies of data in memory 704 or storage 706 for instructions executing at processor 702 to operate on; the results of previous instructions executed at processor 702 for access by subsequent instructions executing at processor 702 or for writing to memory 704 or storage 706; or other suitable data. The data caches may speed up read or write operations by processor 702. The TLBs may speed up virtual-address translation for processor 702. In particular embodiments, processor 702 may include one or more internal registers for data, instructions, or addresses. This disclosure contemplates processor 702 including any suitable number of any suitable internal registers, where appropriate. Where appropriate, processor 702 may include one or more arithmetic logic units (ALUs); be a multi-core processor; or include one or more processors 702. Although this disclosure describes and illustrates a particular processor, this disclosure contemplates any suitable processor.

In examples, memory 704 includes main memory for storing instructions for processor 702 to execute or data for processor 702 to operate on. As an example, and not by way of limitation, computer system 700 may load instructions from storage 706 or another source (such as, for example, another computer system 700) to memory 704. Processor 702 may then load the instructions from memory 704 to an internal register or internal cache. To execute the instructions, processor 702 may retrieve the instructions from the internal register or internal cache and decode them. During or after execution of the instructions, processor 702 may write one or more results (which may be intermediate or final results) to the internal register or internal cache. Processor 702 may then write one or more of those results to memory 704. In particular embodiments, processor 702 executes only instructions in one or more internal registers or internal caches or in memory 704 (as opposed to storage 706 or elsewhere) and operates only on data in one or more internal registers or internal caches or in memory 704 (as opposed to storage 706 or elsewhere). One or more memory buses (which may each include an address bus and a data bus) may couple processor 702 to memory 704. Bus 712 may include one or more memory buses, as described below. In examples, one or more memory management units (MMUs) reside between processor 702 and memory 704 and facilitate accesses to memory 704 requested by processor 702. In particular embodiments, memory 704 includes random access memory (RAM). This RAM may be volatile memory, where appropriate. Where appropriate, this RAM may be dynamic RAM (DRAM) or static RAM (SRAM). Moreover, where appropriate, this RAM may be single-ported or multi-ported RAM. This disclosure contemplates any suitable RAM. Memory 704 may include one or more memories 704, where appropriate. Although this disclosure describes and illustrates particular memory, this disclosure contemplates any suitable memory.

In examples, storage 706 includes mass storage for data or instructions. As an example, and not by way of limitation, storage 706 may include a hard disk drive (HDD), a floppy disk drive, flash memory, an optical disc, a magneto-optical disc, magnetic tape, or a Universal Serial Bus (USB) drive or a combination of two or more of these. Storage 706 may include removable or non-removable (or fixed) media, where appropriate. Storage 706 may be internal or external to computer system 700, where appropriate. In examples, storage 706 is non-volatile, solid-state memory. In particular embodiments, storage 706 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 706 taking any suitable physical form. Storage 706 may include one or more storage control units facilitating communication between processor 702 and storage 706, where appropriate. Where appropriate, storage 706 may include one or more storages 706. Although this disclosure describes and illustrates particular storage, this disclosure contemplates any suitable storage.

In examples, I/O interface 708 includes hardware, software, or both, providing one or more interfaces for communication between computer system 700 and one or more I/O devices. Computer system 700 may include one or more of these I/O devices, where appropriate. One or more of these I/O devices may enable communication between a person and computer system 700. As an example, and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 708 for them. Where appropriate, I/O interface 708 may include one or more device or software drivers enabling processor 702 to drive one or more of these I/O devices. I/O interface 708 may include one or more I/O interfaces 708, where appropriate. Although this disclosure describes and illustrates a particular I/O interface, this disclosure contemplates any suitable I/O interface.

In examples, communication interface 710 includes hardware, software, or both providing one or more interfaces for communication (such as, for example, packet-based communication) between computer system 700 and one or more other computer systems 700 or one or more networks. As an example, and not by way of limitation, communication interface 710 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 710 for it. As an example, and not by way of limitation, computer system 700 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 700 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 700 may include any suitable communication interface 710 for any of these networks, where appropriate. Communication interface 710 may include one or more communication interfaces 710, where appropriate. Although this disclosure describes and illustrates a particular communication interface, this disclosure contemplates any suitable communication interface.

In particular embodiments, bus 712 includes hardware, software, or both coupling components of computer system 700 to each other. As an example and not by way of limitation, bus 712 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 712 may include one or more buses 712, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, computer readable medium or any suitable combination of two or more of these, where appropriate. A computer-readable non-transitory storage medium may be volatile, non-volatile, or a combination of volatile and non-volatile, where appropriate.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

While the disclosed systems have been described in connection with the various examples of the various figures, it is to be understood that other similar implementations may be used or modifications and additions may be made to the described examples of a robotic skin or AI robotics platform, among other things as disclosed herein. For example, one skilled in the art will recognize that robotic skin or AI robotics platform, among other things as disclosed herein in the instant application may apply to any environment, whether wired or wireless, and may be applied to any number of such devices connected via a communications network and interacting across the network. Therefore, the disclosed systems as described herein should not be limited to any single example, but rather should be construed in breadth and scope in accordance with the appended claims.

In describing preferred methods, systems, or apparatuses of the subject matter of the present disclosure - verifying authenticity of media content - as illustrated in the Figures, specific terminology is employed for the sake of clarity. The claimed subject matter, however, is not intended to be limited to the specific terminology so selected.

Also, as used in the specification including the appended claims, the singular forms "a," "an," and "the" include the plural, and reference to a particular numerical value includes at least that particular value, unless the context clearly dictates otherwise. The term "plurality", as used herein, means more than one. When a range of values is expressed, another embodiment includes from the one particular value or to the other particular value. Similarly, when values are expressed as approximations, by use of the antecedent "about," it will be understood that the particular value forms another embodiment. All ranges are inclusive and combinable. It is to be understood that the terminology used herein is for the purpose of describing particular aspects only and is not intended to be limiting.

This written description uses examples to enable any person skilled in the art to practice the claimed subject matter, including making and using any devices or systems and performing any incorporated methods. Other variations of the examples are contemplated herein. It is to be appreciated that certain features of the disclosed subject matter which are, for clarity, described herein in the context of separate embodiments, may also be provided in combination in a single embodiment. Conversely, various features of the disclosed subject matter that are, for brevity, described in the context of a single embodiment, may also be provided separately or in any sub-combination. Further, any reference to values stated in ranges includes each and every value within that range. Any documents cited herein are incorporated herein by reference in their entireties for any and all purposes.

The scope of this disclosure encompasses all changes, substitutions, variations, alterations, and modifications to the example embodiments described or illustrated herein that a person having ordinary skill in the art would comprehend. The scope of this disclosure is not limited to the examples described or illustrated herein. Moreover, although this disclosure describes and illustrates respective embodiments herein as including particular components, elements, feature, functions, operations, or steps, any of these embodiments may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular embodiments as providing particular advantages, particular embodiments may provide none, some, or all of these advantages.

Methods, systems, or computing devices may facilitate shared social media sessions as disclosed herein. A methods, systems, or computing devices may provide for receiving, by a computing device, a request to initiate a shared social media session from a first user; determining content preferences associated with a plurality of users invited to the shared social media session; generating a combined content feed based on the determined content preferences; transmitting notifications to computing devices associated with the plurality of users; establishing synchronized content presentation across the computing devices; and displaying the combined content feed simultaneously across the computing devices. A user preference may be a subset of a user profile. Generating the combined content feed may include aggregating content from multiple social media platforms including first-party platforms and third-party platforms. Establishing synchronized content presentation may include enabling synchronized navigation where content advancement by one user advances content for all users in the shared social media session. The method may further include enabling asynchronous navigation through the combined content feed where users independently navigate through the content; integrating a messaging interface enabling communication between users during the shared social media session; and filtering the combined content feed based on content sharing permissions set by individual users. Aggregating content may include accessing content through application programming interfaces of the multiple social media platforms. The messaging interface may include a text chat interface visible only to participants in the shared social media session. All combinations (including the removal or addition of steps) in this paragraph and the above paragraphs are contemplated in a manner that is consistent with the other portions of the detailed description.

Methods, systems, or computing devices may include aggregating content items from multiple content platforms. The content platforms may include social media platforms providing short-form video content, image sharing platforms, micro-blogging platforms, professional networking platforms, streaming service providers offering video-on-demand content, audio streaming platforms, user-generated content platforms, news media organizations, sports content providers, or public domain repositories. The method may further include normalizing metadata from each content platform into a standardized format, implementing platform-specific content delivery protocols, maintaining creator attribution data, enforcing digital rights management restrictions, or filtering content based on platform-specific usage rights. All combinations (including the removal or addition of steps) in this paragraph are contemplated in a manner that is consistent with the other portions of the detailed description.

Methods, systems, or computing devices may provide for receiving a trigger to initiate a shared social media session through an artificial intelligence agent; identifying content sources across multiple social media platforms; aggregating content from the identified content sources based on preferences of users invited to the shared social media session; generating a shared content stream incorporating content from the multiple social media platforms; and synchronizing presentation of the shared content stream across computing devices of the users. Operations may include integrating third-party content slots within the shared content stream; enabling audio or video communication between users during the shared social media session; and filtering content based on granular sharing permissions specified by each user. The operations may additionally include maintaining session state information enabling users to join or leave the shared social media session. Integrating third-party content slots may include allocating designated positions within the shared content stream for third-party platform content. The granular sharing permissions may specify content categories approved for sharing. All combinations (including the removal or addition of steps) in this paragraph and the above paragraphs are contemplated in a manner that is consistent with the other portions of the detailed description.

Methods, systems, or computing devices may provide for receiving input requesting initiation of a shared social media session; determining user preferences for multiple participants; accessing content across different social media platforms based on the user preferences; generating a unified content feed combining content from the different social media platforms; transmitting the unified content feed to computing devices of the multiple participants; and controlling synchronized or independent navigation through the unified content feed by the multiple participants. The operations may further include integrating advertisement content within the unified content feed and applying artificial intelligence models trained on shared viewing preferences. The system may enable transition between synchronized and independent content navigation modes. The artificial intelligence models may incorporate user demographic information, location information, and historical content interaction patterns. All combinations (including the removal or addition of steps) in this paragraph and the above paragraphs are contemplated in a manner that is consistent with the other portions of the detailed description.

Methods, systems, or computing devices may provide for receiving a shared session request from a first user to initiate a social media content session; retrieving user preference data for the first user and at least one other user; generating, using an artificial intelligence engine, a collective preference model based on the user preference data; aggregating content items from multiple content platforms based on the collective preference model; establishing synchronized playback of the content items across computing devices of the first user and the at least one other user; and managing interactions between the computing devices during the synchronized playback. Managing interactions may include tracking playback states across the computing devices; reconciling state differences between the computing devices; and propagating user interactions from one computing device to other computing devices. Aggregating content items may include interfacing with APIs of multiple content platforms; normalizing content metadata from the content platforms; and filtering content based on shared preference criteria. The method may further include receiving privacy settings from users; filtering shared preference data according to the privacy settings; and excluding private preference data from the collective preference model. Additional operations may include monitoring engagement metrics during the synchronized playback; updating the collective preference model based on the engagement metrics; and adjusting content selection based on the updated preference model. All combinations (including the removal or addition of steps) in this paragraph and the above paragraphs are contemplated in a manner that is consistent with the other portions of the detailed description.

Methods, systems, or computing devices may cause a processor to receive session requests to initiate shared social media sessions; retrieve user preference data for session participants; generate collective preference models using artificial intelligence; aggregate content from multiple platforms; establish synchronized content delivery; and manage session interactions between participants. The system may interface with content platform APIs; normalize content metadata; or filter content based on collective preferences. The system may maintain session state across participant devices; reconcile state inconsistencies; and propagate interaction events. The system may apply privacy controls to preference sharing; collect engagement metrics; and optimize content selection. All combinations (including the removal or addition of steps) in this paragraph and the above paragraphs are contemplated in a manner that is consistent with the other portions of the detailed description.

Methods, systems, or computing devices may provide for receiving input requesting initiation of a shared social media session; determining user profiles associated with multiple user devices; accessing content across different content sources based on the user profiles; generating a unified content feed combining content from the different content sources; and transmitting the unified content feed to respective devices associated with the two or more of the multiple user devices. The method may include receiving a message to control synchronized or independent navigation through the unified content feed by the two or more of the multiple user devices. All combinations (including the removal or addition of steps) in this paragraph and the above paragraphs are contemplated in a manner that is consistent with the other portions of the detailed description.

Methods, systems, or computing devices may provide for receiving input requesting initiation of a shared social media session; determining a first user profile associated with a first user device; determining a second user profile associated with a second user device; accessing content across different content sources based on the first user profile and the second user profile; generating a unified content feed combining content from the different content sources; and transmitting the unified content feed to the first user device and the second user device. The method may further comprise receiving a message to control synchronized or independent navigation through the unified content feed by the first user device or the second user device. All combinations (including the removal or addition of steps) in this paragraph and the above paragraphs are contemplated in a manner that is consistent with the other portions of the detailed description.

## Claims

1. A method comprising:
receiving, by one or more computer processors coupled to memory, input requesting initiation of a shared social media session;
determining a first user profile associated with a first user device;
determining a second user profile associated with a second user device;
accessing content across different content sources based on the first user profile and the second user profile;
generating a unified content feed based on combining content from the different content sources; and
transmitting the unified content feed to the first user device and the second user device.

2. The method of claim 1, further comprising receiving a message to control synchronized or independent navigation through the unified content feed by the first user device or the second user device.

3. The method of claim 1 or claim 2, further comprising integrating advertisement content within the unified content feed.

4. The method of any preceding claim, wherein the generating the unified content feed comprises applying one or more artificial intelligence models trained on shared viewing preferences of the first user profile and the second user profile.

5. The method of claim 4, wherein the one or more artificial intelligence models incorporate location information and historical content interaction patterns.

6. The method of any preceding claim, further comprising enabling transition between synchronized and independent content navigation modes.

7. The method of any preceding claim, wherein the generating the unified content feed is based on a first privacy setting corresponding to the first user profile and a second privacy setting corresponding to the second user profile.

8. The method of any preceding claim, wherein the different content sources comprise a plurality of social media platforms.

9. A non-transitory computer readable storage medium storing computer executable instructions that when executed by a computing device cause the computing device to perform the method of any preceding claim.

10. A device comprising:
a processor; and
a memory coupled with the processor, the memory storing executable instructions that when executed by the processor cause the processor to perform the method of any of claims 1 to 8.
